# FASCICULE DE BREVET EUROPEEN

(11) **EP 0 487 417 B1**
(45) Date de publication et mention de la délivrance du brevet: **12.02.1997**
(21) Numéro de dépôt: 91403132.3
(22) Date de dépôt: 20.11.1991
(51) Int. Cl.: C04B 35/52, C04B 35/80, C04B 35/82, B32B 18/00

(54) **Procédé d'obtention d'un matériau composite à propriétés électromagnétiques maitrisées et matériau obtenu**
Verfahren zur Herstellung eines Verbundmaterials mit kontrollierten elektromagnetischen Eigenschaften und solches erhaltenes Material
Method for making a composite material having controlled electromagnetic properties and material thus obtained

(30) Priorité: 22.11.1990 FR 9014574
(43) Date de publication de la demande: 27.05.1992
(73) Titulaire: AEROSPATIALE Société Nationale Industrielle, 75781 Paris Cédex 16 (FR)
(72) Inventeur: Lespade, Jean-Pierre, F-33700 Merignac (FR); Baudry, Jean-Claude, F-33600 Pessac (FR); Sacy, Olivier, F-33200 Bordeaux (FR)
(74) Mandataire: Lhoste, Catherine

(56) Documents cités:
- EP-A- 0 127 491
- EP-A- 0 172 378
- EP-A- 0 307 968
- FR-A- 2 391 956

## Description

La présente invention se rapporte à un procédé d'obtention d'un matériau composite à propriétés électromagnétiques maîtrisées dans lequel les fibres sont chargées avant leur tissage destiné à constituer l'armature fibreuse du matériau composite recherché.

Un matériau composite est constitué d'une armature fibreuse et d'un liant assurant la rigidité du matériau. L'armature est essentiellement réalisée à partir de fibres textiles très résistantes telles que fibres de verre, de silice, de carbone, de carbure de silicium, d'alumine, d'alumino-silicate, de polyamide et autres fibres comprenant en combinaison les éléments Si, N et C : le liant peut être une résine organique, un métal ou un produit réfractaire.

Les fibres de l'armature peuvent être orientées selon deux ou plusieurs directions de l'espace. Elles peuvent être orientées de façon aléatoire (aléa D), de façon organisée selon deux directions (2D), trois directions (3D ou 3D évo).

Ces matériaux composites peuvent être utilisés dans de nombreux secteurs industriels et notamment dans les domaines spatial, aéronautique et nautique nécéssitant la réalisation de pièces mécaniques légères.

L'invention s'applique aux armatures dites 2D tissées réalisées sur des machines appelées "métiers à tisser" issues généralement de l'industrie textile et adaptées aux besoins propres du secteur des matériaux composites. Les stratifiés par exemple appartiennent à cette catégorie. Les fibres peuvent être tissées suivant 2, 3 ou plus directions d'un même plan.

L'invention s'applique en particulier à l'armature fibreuse décrite dans le document FR-A-2 610 951. Cette armature est couramment appelée 2,5D.

L'invention s'applique aussi à des armatures dites 3D constituées d'un arrangement de fils dans les trois directions de l'espace donnant des pièces de toutes formes (bloc, cylindre, cône, armature plus complexe) et utilisant aussi une méthode de tissage.

A titre d'exemple, l'invention s'applique aux structures tridimensionnelles décrites dans les documents FR-A-2 612 950 et FR-A-2 486 047.

Contrairement à d'autres domaines, on cherche à adapter des matériaux composites aux applications finales de façon très précise. Actuellement, les technologies permettent entre autres d'orienter les fibres de renfort dans les directions des contraintes auxquelles sont soumis ces matériaux et de leur conférer d'excellentes propriétés mécaniques.

De plus, la diversité d'utilisation de ces matériaux oblige les fabricants à maîtriser d'autres propriétés telles que des propriétés physicochimiques (résistance thermique, résistance à l'oxydation) et électromagnétiques (matériau anti-statique, blindage électromagnétique de circuits électroniques complexes, absorbeur de micro-ondes).

L'invention s'applique en particulier à l'obtention d'un matériau composite à conductivité électrique et/ou perméabilité magnétique maîtrisées.

Dans ces matériaux composites, le liant peut être déposé dans l'armature fibreuse soit par voie gazeuse, soit par voie liquide.

Par voie gazeuse, l'armature est placée dans une enceinte à température et pression fixées et est soumise à un flux gazeux dont les molécules se décomposent au contact des fibres ; ce procédé est appelé ICPV (infiltration chimique en phase vapeur).

Par voie liquide, on fait pénétrer un imprégnant liquide dans l'armature qui, par un traitement ultérieur, se transforme en un matériau composite possédant les caractéristiques mécaniques requises.

Dans le cas de matériaux composites carbone-carbone, on peut réaliser cette imprégnation liquide en deux stades, un premier stade d'imprégnation par une résine chargée de particules de graphite, et un deuxième stade d'imprégnation par une résine liquide ou un brai de pétrole liquide, afin d'améliorer l'adhérence des fibres et de la matrice de carbone, comme il est décrit dans EP-A-0 307 968.

On connaît actuellement deux familles de procédés d'introduction de charges dans un matériau composite. La première famille consiste à introduire les charges dans la structure fibreuse au cours de la rigidification de l'armature par le liant ou juste avant cette rigidification et la seconde famille consiste à faire porter les charges par les fibres avant la confection de l'armature.

Selon la première famille, l'introduction des charges peut être faite par infiltration par voie gazeuse dans l'armature. Le principe est le même que celui décrit précédemment pour la mise en place du liant dans l'armature. Après dépôt par ICPV des charges dans l'armature fibreuse, on densifie l'armature ainsi chargée par voie liquide.

L'inconvénient majeur de ce procédé est de déposer des charges uniquement sur des sites chimiques préférentiels, ce qui est contraire à l'obtention d'un matériau chargé de façon homogène. D'autre part, ce procédé ne peut pas être appliqué à toutes les natures de fibres. En effet, la température de dépôt des charges par ICPV doit être inférieure à celle de dégradation des fibres.

Une autre technique d'infiltration de charges dans l'armature consiste à imprégner celle-ci d'une résine liquide à laquelle on a ajouté les charges. Ce procédé décrit par exemple dans le document EP-A-0 307 968 présente plusieurs inconvénients.

La quantité de charges dans la résine conditionne la viscosité de la résine d'imprégnation. En effet, plus la résine est chargée en poudre, plus elle -est visqueuse et plus son introduction dans l'armature est difficile. D'autre part, dans le cas où la granulométrie des charges est importante, le matériau final n'est pas homogène et présente en surface un taux de charges important, qui tend à diminuer lorsqu'on se rapproche du centre de la pièce.

L'infiltration des charges dans l'armature peut aussi être réalisée par un filtre presse comme décrit dans le document EP-A-130 105. Dans ce cas, l'armature est placée dans une enceinte où circulent des charges en suspension dans un solvant. L'armature, placée devant le filtre, est traversée par cette solution afin d'y déposer les charges.

L'inconvénient de cette technique est qu'il est très difficile de maîtriser la quantité de charges déposée dans l'armature. De plus, la cranulométrie de la poudre est dépendante de la taille ces cavités entre les fibres de l'armature et conditionne la qualité d'infiltration.

Ces procédés d'infiltration de charges conduisent à des matériaux composites dont les propriétés physico-chimiques et/ou électromagnétiques ne correspondent pas toujours à celles recherchées.

Selon la seconde famille qui consiste à faire porter les charges par les fibres de l'armature avant sa confection, on peut citer celle décrite dans le document FR-A-2 566 324 qui enseigne la fabrication d'un pré-imprégné fibre-métal ou fibre-minéral pour la réalisation d'objet en matériau composite de haute performance. Les mèches de fibres pré-imprégnées sont recouvertes d'une gaine permettant la rétention de la poudre métallique ou minérale. Elles peuvent alors être tissées.

Dans le document FR-A-2 562 467 il est décrit un matériau composite souple constitué d'une gaine thermoplastique renfermant une mèche de fibres recouverte d'une poudre thermoplastique.

L'inconvénient de ces techniques basées sur le port des charges par les fibres réside dans le fait que la gaine protectrice autour du fil augmente la section apparente du fil. Cette gaine doit être éliminée par un traitement ultérieur, ce qui complique quelque peu la réalisation des matériaux composites. En outre, ceci conduit à une trop grande porosité des matériaux obtenus et à un remplissage en fibres non optimum, ce qui est contraire à une bonne tenue mécanique.

Le principe de l'insertion de charges sur une fibre est en outre connu dans le cas de matériaux composites bobinés, c'est-à-dire réalisés par enroulement filamentaire sur un mandrin. Cette méthode consiste à imprégner le fil de base d'une solution contenant des charges, une résine liquide jouant le rôle de liant et un solvant.

La particularité de cette imprégnation réside dans le fait qu'il faille déposer sur la fibre la quantité totale de résine (liant) nécessaire pour le matériau final, au cours de cette étape.

Après dépôt de la solution sur le fil de base, celui-ci traverse une filière permettant de conserver une quantité définie de solution et circule ensuite dans une étuve pour transformer la résine de l'état liquide à l'état gélifié et permettre d'éliminer le solvant. Le fil obtenu est dit "pré-imprégné" voire "pré-imprégné chargé". Son état est dit "pégueux" au contact de la main, c'est-à-dire collant. Ce fil ne peut nullement être tissé.

Le fil "pégueux" est ensuite déposé sur un mandrin par enroulement en couches successives.

La pièce définitive est obtenue après mise en étuve dans le but de rigidifier (ou durcir) la résine par polymérisation.

Cette dernière opération peut être suivie d'une pyrolyse, transformant la résine en carbone. On comprend que le matériau composite obtenu dans ces conditions a un fibrage en couche comportant en conséquence des risques de délaminage.

L'invention a justement pour objet un procédé d'obtention d'un matériau composite à propriétés électromagnétiques maîtrisées dans lequel les fibres sont préalablement chargées permettant de remédier aux différents inconvénients mentionnés ci-dessus. Elle permet une augmentation de l'homogénéité du matériau composite, une augmentation de la tissabilité des fibres facilitant la fabrication de l'armature, ainsi qu'une excellente maîtrise des propriétés électromagnétiques et/ou physico-chimiques du matériau obtenu.

De façon plus précise, l'invention a pour objet un procédé d'obtention d'un matériau composite à propriétés électromagnétiques maîtrisées et à armature de fibres, consistant essentiellement à :
a) - imprégner chaque fibre d'une solution contenant des charges pulvérulentes à propriétés électromagnétiques, un solvant et un premier liant constitué par une résine organique polymérisable soluble dans le solvant, le solvant ayant une température d'évaporation inférieure à la température de gélification du premier liant en solution,
b) - évaporer le solvant des fibres chargées,
c) - tisser les fibres chargées obtenues en b) pour former l'armature, et
d) - rigidifier l'armature obtenue en c) par un second liant.

Par charges à propriétés électromagnétiques, il faut comprendre des charges ayant des propriétés magnétiques, conductrices ou semi-conductrices.

Le procédé de l'invention permet de conférer à l'armature du matériau composite des propriétés particulières, sans modifier les caractéristiques mécaniques de base du matériau.

Il permet en particulier de placer des charges électromagnétiques dans un matériau très épais d'une façon parfaitement homogène, au coeur du matériau comme en surface, quelle que soit la forme de l'armature fibreuse, complexe ou simple.

Selon l'application envisagée du matériau composite chargé, on peut utiliser des charges ayant des propriétés magnétiques telles que de la poudre de fer, ferrite, nickel, cobalt, des charges ayant des propriétés conductrices de l'électricité telles que de la poudre de platine, d'argent, de cuivre, de nickel, de carbone, ou encore des charges ayant des propriétés semi-conductrices telles que de la poudre de silicium, de germanium ou de carbure de silicium.

Les charges se présentent sous forme d'une poudre ou d'un mélange de poudres ayant une granulométrie de l'ordre du micromètre, voire submicronique.

Les fibres de l'armature sont en particulier celles décrites ci-dessus.

Le procédé de l'invention permet en particulier d'obtenir une armature tissée et rigidifiée dans laquelle la conduction électrique est maîtrisée de façon très précise. En effet, à partir d'une fibre de base se comportant électriquement comme un diélectrique (ou isolant), on peut introduire des charges conductrices sur celle-ci en quantité très précise afin de rendre le matériau final dans un état intermédiaire entre un matériau non conducteur et un matériau conducteur.

Cette très grande maîtrise de la conductivité électrique permet d'envisager une variation de celle-ci en fonction de l'épaisseur du matériau. Ainsi, indépendamment de l'homogénéité du matériau, il est possible à l'aide de la présente invention de réaliser un matériau comme revendiqué dans la revendication 11 ayant une conductivité maîtrisée et dépendante de l'épaisseur.

L'armature est alors constituée de couches de fils ou fibres superposées ayant un taux de charges différent d'une couche à l'autre et/ou des charges de conductivité différente. Ainsi, il est possible de réaliser un gradient de conductivité dans l'épaisseur du matériau et par exemple réaliser un matériau dont la conductivité décroît progressivement de son centre vers sa surface.

Aussi, l'invention s'applique plus spécialement à des fibres non conductrices de l'électricité telles que des fibres de verre, de silice, d'alumine, de carbure de silicium, d'aluminosilicate ou de polyamide.

De même, l'invention s'applique plus spécialement à un liant de rigidification diélectrique.

La solution contenant les charges, le solvant et le premier liant se place dans et sur chaque fibre formant une gaine lisse et glissante autour de celle-ci et joue en partie le rôle d'un ensimage. Ceci permet de diminuer fortement le coefficient de frottement de la fibre avec les éléments environnants et d'améliorer ainsi sa tissabilité.

Au contraire, le pré-imprégné, qu'il soit chargé ou non, utilisé pour le bobinage filamentaire n'est pas tissable du fait de la "pégosité" consécutive à l'état de gélification de la résine lors de l'élimination du solvant.

La fibre généralement employée dans les matériaux composites est constituée de fibrilles parallèles les unes aux autres. La section de chacune d'elle ne confère pas à la fibre, selon l'art antérieur, un taux de remplissage maximum du composite. Aussi, en utilisant le procédé de l'invention, il est possible de remplir les cavités entre les fibrilles par les charges et d'augmenter ainsi notablement le taux de remplissage du matériau sans changer la section de la fibre.

Après le tissage des fibres, il est nécessaire de rigidifier l'armature par un liant. Dans le cas de composites thermostructuraux du type céramique-vitrocéramique, céramique-céramique, carbone-céramique, cette étape de rigidification peut être longue et coûteuse. Aussi, en anticipant le dépôt de charges sur la fibre avant le tissage de l'armature, on diminue le temps de densification et donc le coût de fabrication des pièces en matériau composite.

Cette diminution du temps de densification est considérable dans la technique de densification par ICPV ; le gain en temps est de 20 à 60%.

En effet, l'armature selon l'invention, avant densification, a une quantité de produits plus importante qu'une autre sans charge. Il faut donc déposer moins de liant de rigidification pour terminer la densification.

Ce gain de temps est dû à une diminution de la porosité de la structure fibreuse et surtout à une modification de l'architecture des vides entre les fibres ; les charges déposées sur les fibres créant des pontages qui favorisent le greffage de la matrice.

Le liant de la solution est une résine organique liquide ou un mélange de résines liquides organiques, polymérisables par rayonnements ionisants ou thermiquement. Elles peuvent être thermodurcissables ou thermoplastiques. Ces résines peuvent être des résines silicones, phénoliques, époxy, métha(acryliques), polyvinyliques, etc, et de façon plus générale, des résines à insaturation éthylénique.

Avec ce liant, il est nécessaire d'évaporer le solvant de la solution à une température inférieure à la température de gélification du liant dans le solvant (la température de gélification d'un liant en solution est supérieure à celle du liant seul). Aussi, est-il préférable d'utiliser comme solvant des solvants ayant une faible tension de vapeur et une faible température d'ébullition. Ce solvant présente généralement une température d'ébullition au plus égale à 100°C et une tension de vapeur supérieure à 92 kPa à 20°C.

A titre d'exemple, on peut utiliser un alcool inférieur tel que l'éthanol, le n-propanol, l'isopropanol, le n-butanol ou encore des alcanes halogénés inférieurs tels que le dichlorométhane, le chloroforme, le dichloroéthane ou encore l'acétone, la méthyléthylcétone, l'acétate d'éthyle, le tétrahydrofuranne.

Selon l'application envisagée, le liant de la solution contenant les charges et le liant de rigidification de l'armature fibreuse peuvent être de même nature, c'est -à-dire de même composition ou de nature différente à condition d'être compatible chimiquement.

Le liant de rigidification peut être un verre d'oxyde (boro-silicate ou alumino-silicate), une vitro-céramique (alumino-silicate de lithium), un produit réfractaire (céramique diélectrique en particulier telle que silice, alumine, nitrure de bore ou de silicium) ou une résine organique diélectrique. La résine est notamment l'une de celles citées précédemment.

Par ailleurs, les charges peuvent être de même nature ou de nature différente de celle des fibres. Elles peuvent aussi être de même nature ou de nature différente de celle du liant destiné à la rigidification.

Afin de ne conserver qu'une quantité précise de solution, on effectue avantageusement une étape de calibrage. Cette étape consiste à faire traverser la fibre recouverte de la solution contenant les charges, dans une filière. Le taux d'imprégnation de la fibre est inférieur à 5% et en particulier de l'ordre de 3%.

En cas de besoin, il est possible d'effectuer un traitement thermique complémentaire après l'évaporation du solvant en vue de stabiliser l'état du liant et d'assurer le maintien des charges sur la fibre. La température de stabilisation doit être comprise entre la température de gélification du liant et la température de polymérisation de ce liant pour permettre une bonne tissabilité.

D'autres caractéristiques et avantages de l'invention ressortiront mieux de la description qui va suivre, donnée à titre illustratif et non limitatif, en référence aux dessins annexés dans lesquels :
- la figure 1 représente schématiquement les différentes étapes du procédé conforme à l'invention,
- la figure 2 illustre l'étape de charge de la fibre selon l'invention, et
- la figure 3 représente un matériau composite comportant un gradient de conductivité électrique conformément à l'invention.

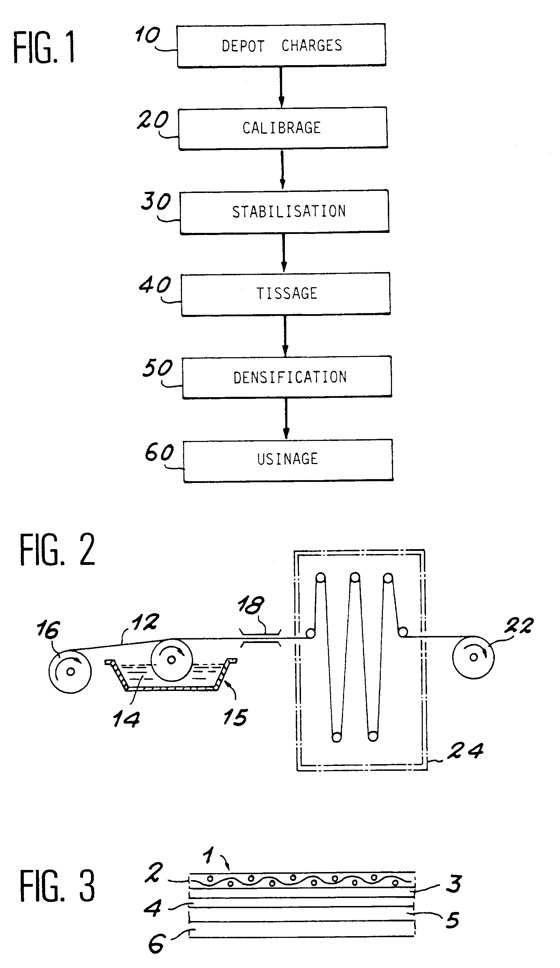

En référence aux figures 1 et 2, la première étape 10 du procédé conforme à l'invention consiste à déposer des charges pulvérulentes, conductrices, semiconductrices ou magnétiques sur chaque fibre 12 diélectrique destinée à constituer l'armature du matériau composite. Pour ce faire, on imprègne chaque fibre 12 d'une solution 14 contenant des charges sous forme pulvérulente, un liant organique liquide polymérisable et un solvant organique à température d'ébullition inférieure à 100°C et à tension de vapeur supérieure à 92 kPa à 20°C. Cette imprégnation se fait par transfert sur la fibre 12 de la solution 14 contenue dans un bac 15.

La solution contient en poids de 5 à 13% de charges, de 9 à 17% de liant et de 78 à 86% de solvant. La poudre a une granulométrie inférieure ou égale au micromètre.

Après dépôt de cette solution sur la fibre, celle-ci traverse une filière 18 lui permettant de ne conserver qu'un taux d'imprégnation de 3% environ. Cette étape de calibrage est symbolisée en 20 sur la figure 1.

Après évaporation du solvant dans une étuve 24 (figure 2) à au plus 100°C, on obtient une fibre constituée de sa matière originelle, du liant et des charges. Cette fibre est dite chargée. Un traitement thermique à la température de gélification du liant permet une stabilisation du liant et un maintien des charges sur la fibre. Cette étape est symbolisée en 30 sur la figure 1.

La fibre peut être une fibre de verre, de silice, d'aramide, de carbure de silicium, d'alumine.

On effectue alors un tissage 40, selon la technique connue, des fibres chargées pour former une armature de fibres chargées du type 2D, 2,5D ou 3D, comme décrit précédemment.

On effectue alors une rigidification ou densification 50 par voie liquide ou par voie gazeuse de l'armature tissée, conformément à l'art antérieur, par un liant diélectrique.

Par voie liquide, l'armature fibreuse chargée est imprégnée sous vide par exemple par une résine diélectrique que l'on polymérise puis réticule à chaud. Ces étapes sont effectuées plusieurs fois (5 en général).

Par voie gazeuse, on peut réaliser la densification comme décrit dans les documents FR-A-2 611 198 et FR-A-2 643 898.

La dernière étape consiste en un usinage 60 de la pièce obtenue.

### EXEMPLE 1 : Imprégnation du fil dit "chargé" pour obtenir un matériau composite à conductivité maîtrisée.

On introduit des charges de carbone sur des fibres 12 de silice par imprégnation de chacune d'elles à l'aide d'une solution 14 contenant :
- des charges de carbone sous forme d'une poudre de granulométrie submicronique : la quantité de charges contenue dans la solution est proportionnelle à la conductivité désirée et est choisie dans l'intervalle allant de 15 à 35g ;
- de l'isopropanol : 240g
- de la résine phénolique : 29g.

Le fil de base est dévidé de sa bobine 16 et trempe dans le bac 15 d'imprégnation contenant la solution 14. Après trempage de la fibre 12 dans la solution, la fibre traverse une filière de calibrage 18 lui permettant de conserver une quantité définie de solution.

Le taux d'imprégnation est de l'ordre de 3%, ce qui permet d'obtenir un matériau ayant une conductivité électrique maîtrisée. En outre, ce taux est équivalent à celui d'un ensimage.

Le fil dit chargé est enroulé sur un support 22 après passage dans l'étuve 24 pour éliminer le solvant. La température de l'étuve est de 100°C environ.

On effectue ensuite une stabilisation thermique de ce fil à 95°C ± 5°C afin de bloquer l'évolution de la résine phénolique et d'éviter tout risque de dilution du mélange pendant les traitements ultérieurs.

On effectue alors un tissage selon une configuration 3D puis on rigidifie la structure par une résine phénolique. Cette rigidification consiste en une imprégnation de la structure par la résine suivie d'une polymérisation à 180°C. Le matériau est éventuellement usiné ; il présente une répartition homogène des charges et donc une conductivité électrique parfaitement maîtrisée.

### EXEMPLE 2 : Réalisation d'un stratifié.

Afin de créer un gradient de conductivité électrique dans l'épaisseur d'un matériau composite, on réalise une armature, telle que représenté sur la figure 3, composée d'un empilement 1 de tissus 2, 3, 4, 5, 6 différents les uns des autres par leur taux de charges.

Chaque tissu est réalisé selon le procédé de tissage des armatures 2D et utilise une fibre de verre ensimée suivant le procédé décrit dans l'exemple 1.

Ces différents tissus sont empilés et imprégnés avec de la résine époxy que l'on durcit, formant ainsi un stratifié.

Ainsi, l'armature finale possède une conduction variable selon l'épaisseur qui est maîtrisée dès le démarrage du processus de fabrication et non subie comme dans le cas où le dépôt de charges s'effectue après réalisation de l'armature.

On peut utiliser en particulier 5 types de fibres ayant un taux de charges en carbone différent et variant graduellemnt de 0,5% à 2,5% en volume. Ce qui correspond à une conductivité variant respectivement de 2 à 20 ohms⁻¹m⁻¹. On peut alors former un stratifié 1 dont la conductivité décroît par exemple du tissu supérieur 2 au tissu inférieur 6.

### EXEMPLE 3

Cet exemple se distingue de l'exemple 1 par l'utilisation d'une solution contenant une résine époxy polymérisable et de la méthyléthylcétone à la place de la résine phénolique et de l'isopropanol.

### EXEMPLE 4

Cet exemple se distingue de l'exemple 2 par l'utilisation d'une résine phénolique à la place de la résine époxy.

## Revendications

1. Procédé d'obtention d'un matériau composite à propriétés électromagnétiques maîtrisées et à une armature de fibres, consistant essentiellement à :
a) - imprégner (10) chaque fibre (12) d'une solution (14) contenant des charges pulvérulentes à propriétés électromagnétiques, un solvant et un premier liant constitué par une résine organique polymérisable soluble dans le solvant, le solvant ayant une température d'évaporation inférieure à la température de gélification du premier liant en solution,
b) - évaporer (24) le solvant des fibres chargées,
c) - tisser (40) les fibres chargées obtenues en b) pour former l'armature, et
d) - rigidifier (50) l'armature obtenue en c) par un second liant.

2. Procédé selon la revendication 1, caractérisé en ce que les fibres sont non conductrices de l'électricité.

3. Procédé selon la revendication 1 ou 2, caractérisé en ce que les charges sont conductrices de l'électricité.

4. Procédé selon l'une quelconque des revendications 1 à 3, caractérisé en ce que le second liant est diélectrique.

5. Procédé se ton l'une quelconque des revendications 1 à 4, caractérisé en ce que l'on effectue un calibrage (20) de la quantité de solution déposée, entre tes étapes a) et b).

6. Procédé selon la revendication 5, caractérisé en ce que le calibrage est effectué en faisant passer chaque fibre chargée (12) dans une filière (18).

7. Procédé selon l'une quelconque des revendications 1 à 6, caractérisé en ce que le taux d'imprégnation de la fibre est de 3% environ.

8. Procédé selon l'une quelconque des revendications 1 à 7, caractérisé en ce que l'on effectue un traitement thermique (30) entre les étapes b) et c) pour stabiliser le premier liant déposé sur chaque fibre.

9. Procédé selon la revendication 8, caractérisé en ce que le traitement thermique est effectué à une température comprise entre la température de gélification du premier liant et la température de polymérisation.

10. Procédé selon l'une quelconque des revendications 1 à 9, caractérisé en ce que les fibres sont en silice, les charges sont en carbone et les premier et second liants sont des résines organiques polymérisables.

11. Matériau composite à propriétés électromagnétiques maîtrisées, obtenu par le procédé selon l'une quelconque des revendications 1 à 10, caractérisé en ce que les charges sont conductrices d'électricité et en ce que le matériau est constitué de couches de fibres superposées ayant un taux de charges différent ou des charges de conductivité différente d'une couche à l'autre de façon à réaliser un gradient de conductivité électrique dans l'épaisseur du matériau.

12. Matériau selon la revendication 11, caractérisé en ce que les fibres, le premier et le second liants sont diélectriques.

## Claims

1. Process for obtaining a composite material having controlled electromagnetic properties and with a fibre reinforcement, essentially comprising:
a) - impregnating (10) each fibre (12) with a solution (14) containing pulverulent fillers having electromagnetic properties, a solvent and a first binder constituted by a polymerizable, organic resin soluble in the solvent, the solvent having an evaporation temperature below the gelling temperature of the first binder in solution,
b) - evaporating (24) the solvent from the filled fibres,
c) - weaving (40) the filled fibres obtained in b) to form the reinforcement and
d) - rigidifying (50) the reinforcement obtained in c) by a second binder.

2. Process according to claim 1, characterized in that the fibres do not conduct electricity.

3. Process according to claim 1 or 2, characterized in that the fillers conduct electricity.

4. Process according to any one of the claims 1 to 3, characterized in that the second binder is dielectric.

5. Process according to any one of the claims 1 to 4, characterized in that there is a calibration (20) of the deposited solution quantity between stages a) and b).

6. Process according to claim 5, characterized in that calibration is carried out by passing each filled fibre (12) into a spinneret (18).

7. Process according to any one of the claims 1 to 6, characterized in that the fibre impregnation level is approximately 3%.

8. Process according to any one of the claims 1 to 7, characterized in that a heat treatment (30) is performed between stages b) and c) in order to stabilize the first binder deposited on each fibre.

9. Process according to claim 8, characterized in that the heat treatment is performed at a temperature between the gel point of the first binder and the polymerization temperature.

10. Process according to any one of the claims 1 to 9, characterized in that the fibres are of silica, the fillers of carbon and the first and second binders are polymerizable organic resins.

11. Composite material having controlled electromagnetic properties obtained by the process according to any one of the claims 1 to 10, characterized in that the fillers are electricity conducting and in that the material is constituted by layers of superimposed fibres having different filling levels or different conductivity charges between the individual layers, so as to obtain an electrical conductivity gradient in the thickness of the material.

12. Material according to claim 11, characterized in that the fibres and first and second binders are dielectric.

## Patentansprüche

1. Verfahren zur Herstellung eines Verbundmaterials mit kontrollierten elektromagnetischen Eigenschaften und mit einer Bewehrung aus Fasern, im wesentlichen mit folgenden Schritten:
a) - Imprägnieren (10) jeder Faser (12) mit einer Lösung (14), die pulvrige Beladungsstoffe mit elektromagnetischen Eigenschaften, ein Lösungsmittel und ein erstes Bindemittel enthält, das aus einem polymerisierbaren organischen Harz besteht, das im Lösungsmittel löslich ist, wobei das Lösungsmittel eine Verdampfungstemperatur unterhalb der Gelbildungstemperatur des ersten Bindemittels in Lösung aufweist,
b) - Verdampfen (24) des Lösungsmittels von den beladenen Fasern,
c) - Weben (40) der beladenen, in b) gewonnenen Fasern, um die Bewehrung zu bilden, und
d) - Versteifen (50) der in c) gewonnenen Bewehrung durch ein zweites Bindemittel.

2. Verfahren nach Anspruch 1, dadurch gekennzeichnet, daß die Fasern keine elektrischen Leiter sind.

3. Verfahren nach Anspruch 1 oder 2, dadurch gekennzeichnet, daß die Beladungsstoffe elektrische Leiter sind.

4. Verfahren nach einem der Ansprüche 1 bis 3, dadurch gekennzeichnet, daß das zweite Bindemittel dielektrisch ist.

5. Verfahren nach einem der Ansprüche 1 bis 4, dadurch gekennzeichnet, daß eine Kalibrierung (20) der aufgebrachten Lösungsmenge zwischen den Schritten a) und b) durchgeführt wird.

6. Verfahren nach Anspruch 5, dadurch gekennzeichnet, daß die Kalibrierung durchgeführt wird, indem jede beladene Faser (12) in eine Ziehdüse bzw. in ein Ziehwerk (18) geleitet wird.

7. Verfahren nach einem der Ansprüche 1 bis 6, dadurch gekennzeichnet, daß der Grad der Imprägnierung der Faser ungefähr 3% beträgt.

8. Verfahren nach einem der Ansprüche 1 bis 7, dadurch gekennzeichnet, daß eine thermische Behandlung (30) zwischen den Schritten b) und c) durchgeführt wird, um das erste auf jeder Faser aufgebrachte Bindemittel zu stabilisieren.

9. Verfahren nach Anspruch 8, dadurch gekennzeichnet, daß die thermische Behandlung bei einer Temperatur durchgeführt wird, die zwischen der Gelbildungstemperatur des ersten Bindemittels und der Polymerisationstemperatur liegt.

10. Verfahren nach einem der Ansprüche 1 bis 9, dadurch gekennzeichnet, daß die Fasern aus Siliciumdioxid sind, wobei die Beladungsstoffe aus Kohlenstoff sind und das erste und zweite Bindemittel organische polymerisierbare Harze sind.

11. Verbundmaterial mit kontrollierten elektromagnetischen Eigenschaften, das durch das Verfahren nach einem der Ansprüche 1 bis 10 hergestellt wird, dadurch gekennzeichnet, daß die Beladungsstoffe elektrische Leiter sind und daß das Material aus übereinander gelegten Schichten aus Fasern aufgebaut ist, die einen unterschiedlichen Gehalt an Beladungsstoffen oder Beladungsstoffe von unterschiedlicher Leitfähigkeit von einer Schicht zur anderen derart aufweisen, daß ein Gradient der elektrischen Leitfähigkeit in der Materialstärke verwirklicht ist.

12. Material nach Anspruch 11, dadurch gekennzeichnet, daß die Fasern, das erste und das zweite Bindemittel dielektrisch sind.
